# EUROPEAN PATENT SPECIFICATION

(11) **EP 1 380 168 B1**
(45) Date of publication and mention of the grant of the patent: **17.09.2014**
(21) Application number: 02721441.0
(22) Date of filing: 13.03.2002
(51) Int. Cl.: G06Q 30/02, H04N 21/2543, H04N 21/258, H04N 21/422, H04N 21/435, H04N 21/442, H04N 21/45, H04N 21/454, H04N 21/462, H04N 21/4725, H04N 21/4782, H04N 21/4784, H04N 21/81

(54) **AFFINITY MARKETING FOR INTERACTIVE MEDIA SYSTEMS**
AFFINITÄTSMARKETING FÜR INTERAKTIVE MEDIASYSTEME
MERCATIQUE PAR AFFINITE POUR SYSTEMES MULTIMEDIA INTERACTIFS

(30) Priority: 13.03.2001 US 275295 P; 26.10.2001 US 46618
(43) Date of publication of application: 14.01.2004
(73) Proprietor: OpenTV, Inc., San Francisco, CA 94111 (US)
(72) Inventor: MARKEL, Steven, O., Highlands Ranch, CO 80126 (US)
(74) Representative: Wenger, Joel-Théophile
(86) International application number: PCT/US2002/008049
(87) International publication number: WO 2002/073967

(56) References cited:
- EP-A- 0 921 696
- WO-A-00/38427
- WO-A-00/49801
- WO-A-00/57295

## Description

### Background of the Invention

### a. Field of the Invention

The present invention pertains to television and broadcast media systems and more specifically to a system and method of increased viewership of programs and advertisements.

### b. Description of the Background

Cable television, satellite, terrestrial broadcast, and Internet systems offer viewers a great expanse of program material. New channels and new programs, including educational, foreign, and local content, continue to emerge. With an ever-increasing range of content, broadcasters strive to attract viewers in order to generate advertising revenue. As such, the challenge to broadcasters is to attract an audience, maintain their viewing loyalty, and to provide a metric of viewership that may be employed to attract advertisers and to establish advertising rates.

In order to attract new viewers, broadcasters may introduce a new genre of programming such as 'reality' series comprising trivia contests with large monetary awards or survivalist contests, for example. If a new genre proves popular with a viewing audience, other broadcasters may duplicate the new genre, potentially reducing audience size for competing programs, or, over time the novelty of the new genre may erode, requiring new programming to attract viewers. Broadcasters may also employ methods to attract viewers to new program such as scheduling a new program between programs with an established audience. If a new program attains a significant audience, it may be moved to a new program time. Broadcasters may also air promotions for new programs in order to attract viewers. Such promotions may include snippets and ticklers to entice viewers to watch the programs.

Once a program has established an audience, the broadcaster strives to achieve viewer loyalty and maintain or increase the audience. Audience size and viewer loyalty affect the revenue a broadcaster may derive from advertisements shown in conjunction with the program. Ideally, viewer loyalty is attained through the quality and content of the program. Enhancing a program with additional information or interactive content may bolster viewer loyalty. A sporting event may be enhanced through additional information providing a player's biography or detailed scoring statistics, for example, that may be displayed to viewers with a set top box enabled television, interactive television, satellite receiver, computer, or similar system. Game show enhancements may provide information on the players, or allow the viewer to play along as a "virtual" contestant. This method has been successfully employed with a number of trivia game shows. A limitation of this method is that the viewer have a set top box equipped television or windowed display environment. As the base of set top boxes grow, especially with the deployment of digital broadcast, the issue of requiring a set top box for some forms of enhancement is attenuated. Enhancement may also employ the display of web-accessed information in synchrony with broadcast content. Enhancement information may be viewed, for example, on a laptop computer during a program, or may be displayed with the program on a single display unit. A method that has shown some success in attracting viewers is to provide a contest or sweepstakes during a program. Entry into the contest or sweepstakes may require that the viewer call a specified telephone number or mail a post card to a specified address. In a vast majority of cases, no feedback is provided to the viewer regarding receipt of an entry. Even if broadcasters employ various methods to attract viewers, viewers may mute the audio output or view another program when advertising is presented. Further, video recording equipment, such as some digital video recorders, for example, may allow deletion of advertising messages. A survey by one digital recorder manufacturer indicates that 84 percent of customers skip advertisements.

Broadcasters employ metrics of how many viewers watch each program in order to attract advertisers and to set advertising rates. An exact count of the number of viewers of a program is difficult to establish, in contrast to newspaper or magazine publications.

An information service commonly employed is the Nielsen ratings from Nielsen Media Research, Inc headquartered at 299 Park Avenue New York, New York 10171. Nielsen Media Research typically asks viewing habit questions to a small sample of approximately 5000 households. From this sampling; Nielsen generates a measure of how many people watched a particular program or advertisement.

The above methods of attracting and retaining viewers and providing a measure of audience size all have limitations, especially in gauging actual viewing of advertisements.

Therefore a new method for attracting viewers and measuring audience size is needed.

The document EP 0 921 696 describes a device and method to reward a television user for watching commercials. When a broadcast commercial program is displayed on a display (7A), the TV user is requested to send responses. When the user wants to respond to the request, the user operates a prescribed one of the ten keys (32) of a remote controller (31). When the user responds correspondingly to the response request of the commercial program, a point is added to a smart card (10). The user can utilize the points recorded on the smart card (10) when the user wants to view and listen to a pay-TV program.

The document WO 00/38427 describes a method and an arrangement for distribution of a varied selection of signal sequences in media channels (11, 12) in connection with broadcasting of a fixed selection (12) of signal sequences over the channels (11). It is directed at recipient groups (1, 2, 3, 4, 5) that have been divided up according to different selections of varied signal sequences. A centre (10) broadcasts one and the same fixed selection of signal sequences in different versions according to the varied selections of signal sequences over channels (11, 12) in a network with two-way communication (25). Each of the said versions is intended to be received by a specific recipient group (2). Individual persons within the respective recipient groups are free to acknowledge (19) via the two-way communication (25) over a channel that they have viewed or noted a signal sequence. The acknowledgements (19) are stored in a network (20) and form the basis of bonuses directed to individual persons.

The document WO 00/57295 describes that Hot spot data is encoded in portions such as the display data portion of a television signal such that the encoded hot spot data is unaffected by any alteration to television signals performed by intermediate broadcasters. Hot spot data may include data o identifying the location of hot spots in an image frame and vendor system data associated with the hot spots. A transaction enabler block (330) may display images represented by the image frames and enable a viewer to access vendor systems by selecting the hot spot areas via a remote control (320).

It is therefore known to reward a user for watching commercial by allocating points (EP 0 921 696). These points are stored locally on the smart card and later converted into TV content. These points are collected during a predefined time corresponding to the commercial.

The problem to be solved is to avoid undue collection of points during a commercial. The proposed solution is highlighted in the attached claims.

### Summary of the Invention

The present invention overcomes the disadvantages and limitations of the prior art by providing a measurable interactive stimulus during programs and advertising that may be employed to establish and maintain viewer loyalty to programs and advertising. Viewers may be invited to participate in interactive content that may be provided as an enhancement to a program. The method of the present invention may also be implemented as part of an affinity marketing program that allows broadcasters to identify viewers interested in a certain product or topic, and to offer the viewer related products or information from multiple sellers.

Viewers may earn points by watching programming that may comprise program content and/or advertising and by responding to on-screen prompts or selected events within the program. Points may be accumulated and then redeemed for merchandise related to the program or network. Prompts synchronized with video programming may invite viewers to a program's interactive site where viewers may review account status, learn more about other programming offered by the network, set reminders for upcoming shows and perform other interactions.

The invention therefore may comprise a method of rewarding viewers to watch broadcast content comprising: informing the viewers that awards may be earned by responding to specific events contained in the broadcast content, identifying the specific events, providing an interface through which the viewers may enter a response to the events, receiving the response, assigning a point value to the response, accumulating the point value with previous point values, if any, associated with a previous response from the viewer to produce a point total, and providing redemption of the points when the point total is greater than or equal to a predetermined number of points.

Advertising content may also be enhanced in a similar manner, wherein points are awarded for responses to on-screen prompts or selected events, and may include "point sharing" such that points may be awarded to a viewer for responses associated with programs and advertising.

Viewer participation is simple and voluntary. The viewer may be invited to register through interactive on-screen prompts and/or through on-air promotions. Registration may also be accomplished through web site access employing the Internet. Registration may also include selection of a program or programs with which the viewer may interact and accumulate points. Once registered, stimulus may be provided whenever an associated program is displayed, or stimulus may be provided in response to selection of an on-screen icon, remote control function, or other user input. The viewer may earn points by responding to program icons and events through remote control key entry, mouse or pointing device entry, or other input device entry, such as a keyboard, for example. If a viewer has not participated in a program for a period of time, the stimulus for that program may be discontinued, allowing the viewer to either re-establish participation through web site access, or to discontinue participation without further action.

For example, viewers may earn points for finding and responding to various elements or events hidden within the program, such as certain characters, actors, or automobiles in a program, or when an event occurs, such as when certain phrase or key words are spoken. Additionally, points may be awarded to viewers who tune in for every episode of a given series. For example, viewers may be awarded 100 points for each individual episode, and a progressive 100 points if the episodes are viewed week-to-week. Further, viewers may earn additional points by remaining tuned during commercials and responding to either on-screen prompts or in-program campaigns coordinated with the program. An interactive site may be created and may be branded by a broadband network operator. This site may provide viewers a single location for registering with participating point programs as well as reviewing account status. A viewer may employ a television with set top box, computer, or other network capable device to access a web site and determine point totals, what points may be redeemed for, and to redeem points for merchandise, products, or services.

The invention may further comprise a system for rewarding a viewer to watch broadcast content comprising: a server that includes an enhancement that may be broadcast with the broadcast content, the enhancement indicating an event for which a viewer response can be awarded points, a network connection that communicates the response from the viewer, a first software program that receives the response and assigns a point value to the response, and a second software program that accumulates the point values with previous point values, if any, and stores an accumulated result.

Advantages of the present invention include providing accurate measurement of viewing, establishing viewer loyalty for viewing content including advertising, providing a measure of viewer interest in new content, and for collecting viewer information may be employed for market analysis and marketing strategies.

### Description of the Figures

In the figures,
Figure 1 depicts a system environment of an embodiment of the present invention.
Figure 2 depicts a viewer registration interface as may be presented through a web page or through a receiving unit.
Figure 3 depicts software routines that may be stored in the viewer's receiving unit.
Figure 4 depicts an electronic entry form that may be employed to establish a points reward campaign.
Figure 5 depicts an enhancement creation screen.
Figure 6 depicts a data encapsulation screen.
Figure 7 is a flowchart of operation of an embodiment of the present invention.

### Detailed Description of the Invention

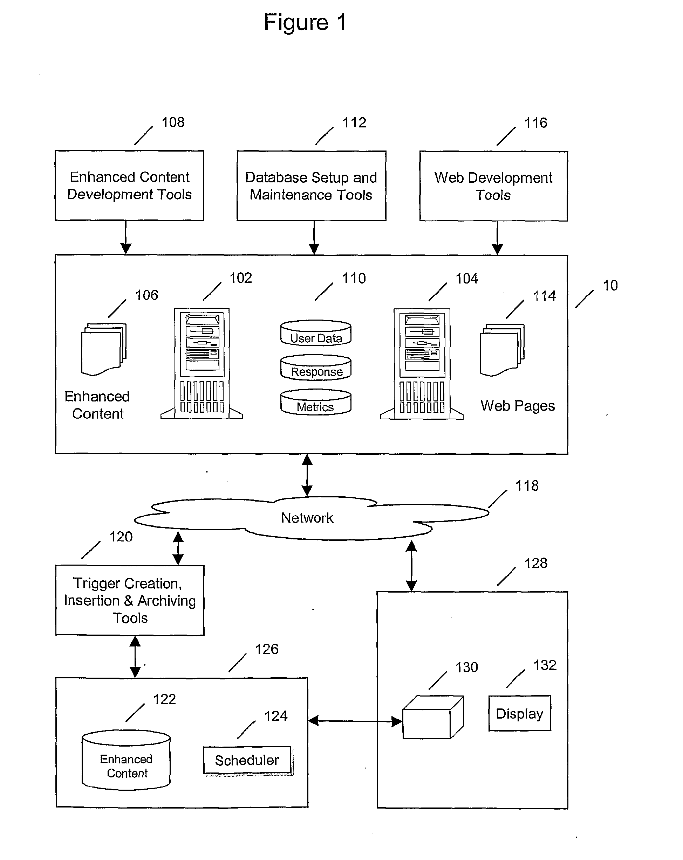

Figure 1 depicts a system environment of the present invention. Server group 100 comprises servers 102, 104 that are typically independent units and may be at separate locations, however a single server may be employed. Server 102 may contain enhanced content 106 that may be created employing enhanced content development tools 108. Enhanced content development tools 108 may be employed to create receiving unit independent enhanced content code that is stored in the receiving unit that that receives viewer responses and sends them to a server.

Enhanced content may comprise images and or audio that may be displayed in a synchronized manner with a program or advertisement. Enhanced content may also comprise a software program downloaded to a viewers receiving unit that supports viewer response to program events. Server 104 may contain data items 110 that may be created using database setup and maintenance tools 112. Database setup and maintenance tools 112 may be employed with a database for capturing registration information, user response data, aggregation, point redemption, and report generation. Server 104 may also contain web pages 114 that may be created using web development tools 116. Web pages 114 may allow a viewer to register for a points program, see accumulated points, redeem points for products or services, and to access customer service functions. Web pages 114 may also be generated in one or more versions that are compatible with set top boxes, interactive televisions, or other equipment such as WebTV form WebTV Networks Inc. of Palo Alto, Calif.

Server group 100 is connected to network 118 that may comprise a LAN, WAN, Internet, or other network, including cable television and satellite television networks. Enhanced content may be transferred from server group 100 and may be processed by trigger creation, insertion, and archiving tools 120 to produce ready for broadcast enhanced content 122 that may be accessed by broadcast unit 126 and may be transmitted employing scheduler 124. The transmitted signal is received by receiving unit 130 at viewer premises 128 and is presented on display 132. Receiving unit 130 may comprise a television, interactive television, set top box, satellite receiver, computer, or other device operable to receive a broadcast and operable to receive viewer input and communicate the input to server group 100. Some or all of the elements shown in figure 1 may be employed to practice various embodiments of the present invention.

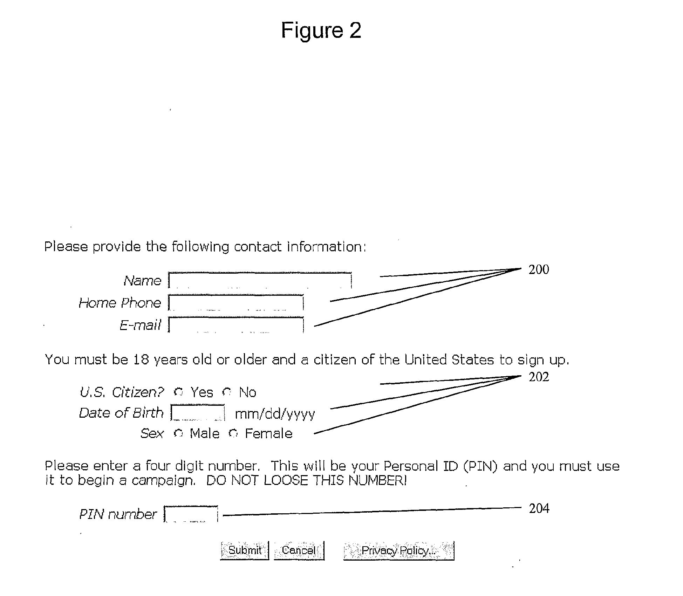

In each of the embodiments, a viewer typically registers to establish an account in which points may be accumulated. Figure 2 depicts a viewer registration interface as may be presented through a web page or through a receiving unit. The registration interface may comprise contact information 200, demographic information 202, and security information 204. Contact information 200 may comprise the viewer's name, e-mail address, telephone, mailing address or other information. Demographic section 202 may comprise age, gender, and other information that may be used to determine characteristics of the viewing audience. Security information 204 may comprise a personal identification number (PIN) or other security information that may be employed to provide security when accessing point information or when redeeming points for products or services. Some information may be optional and some may be required. In some instances, registration may be automatic such that members of certain groups may be 'pre-registered' and need only enter a PIN to complete registration. When a viewer submits registration information, a 'cookie' comprising a small amount of information, that may include registration information and an account ID (identification), may be stored on the viewers receiving unit. A reply may be sent to the viewer to confirm registration and to verify the e-mail address provided. From the registration information, a viewer account may be established in server 104 shown in figure 1. The registration interface of figure 2 may also provide links to other pages that describe terms, conditions, policies, rules, eligibility, prizes and other information associated with the points award program.

In a first embodiment, after the viewer is registered, broadcast unit 126 transmits enhanced content 122 to a viewer's receiving unit 130 that includes visible or audible stimulus that is then presented on display 132. Enhanced content 122 may also comprise a program that is stored in receiving unit 130 that receives user input in response to the stimulus or to an identified event. The program may be employed to establish a period in time (a capture window) during which a viewer response may be accepted. If a viewer response is received outside the period of time, the response may be rejected. Further, if a number of responses in excess of a predetermined threshold are received, all responses may be rejected. Such rejection of responses may be employed to award points only to viewers that are actually watching a program or advertisement and respond within the appropriate period of time such that viewers that randomly respond or employ automated or programmatic methods to produce responses are not awarded points. Enhanced content 122 may include information determining the start and end of the capture window.

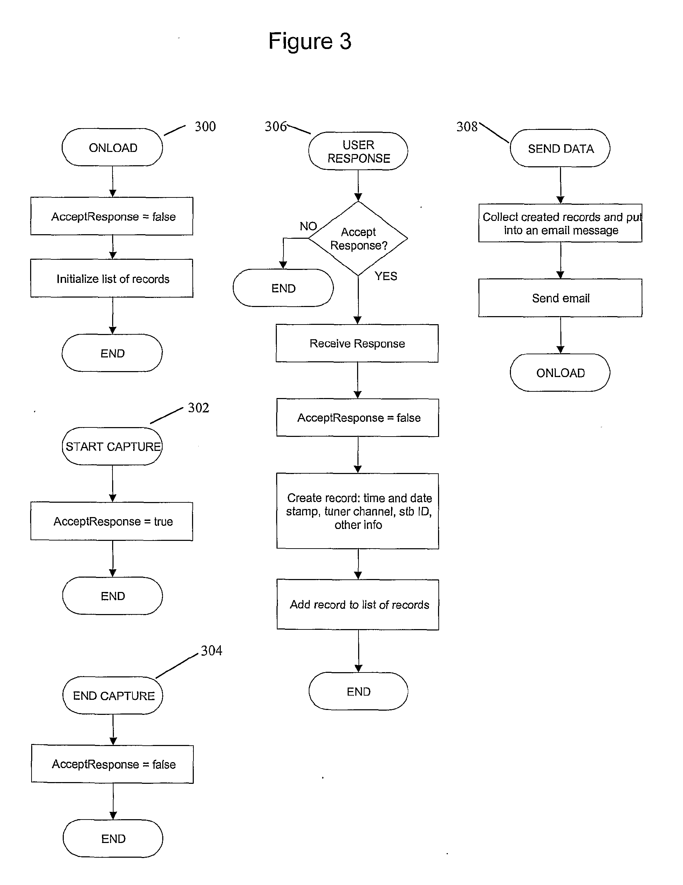

Figure 3 depicts software routines that may be stored in the viewer's receiving unit. The software routines depicted in figure 3 may be invoked as a result of information received from broadcast unit 126 or from user input. The software routines shown in figure 3 may be downloaded to a receiving unit as part of the enhanced content or may be accessed through a network connection such as the Internet. When the code is initialized, onload routine 300 is invoked. Onload routine 300 may first set an "AcceptResponse" variable to false to ignore viewer input until program initialization is complete and an enabling signal is received. Onload routine 300 may then setup and initialize alist configured to hold a list of valid viewer responses. After the lists are configured and any other initialization tasks completed, onload routine 300 is completed. The start capture routine 302 may be invoked in response to information contained in enhanced content 122 that indicates the beginning of a capture window. Start capture routine 302 sets the "AcceptResponse" variable true, allowing viewer response inputs to be received. The end capture routine 304 may be invoked in response to information contained in enhanced content 122 that indicates the end of a capture window. End capture routine 304 resets the "AcceptResponse" variable such that no viewer responses are accepted. When a viewer response input is received, user response routine 306 checks the variable "AcceptResponse" to see if it is true. If "AcceptResponse" is not true, no viewer response inputs are accepted and the routine ends. If the "AcceptResponse" variable is true, then the routine waits until a viewer response is received or until the "AcceptResponse" variable is reset by end capture routine 304. If a viewer response is received, the "AcceptResponse" variable may be reset to false to reject further responses from being captured until the "AcceptResponse" variable is set true by the start capture routine 302. The received viewer response results in a record being created. The record may contain a time and date stamp, the channel the set top box is tuned to, the set top box ID (identification) code, and other relevant information. This record is then added to the list of any existing records that were previously created. The send data routine 308 may be invoked in response to information contained in enhanced content 122. Send data routine may create a message comprising information from the list of records and may send the message to a server, such as server 104 of figure 1. As previously described, the embodiment may also accept a plurality of responses and may accept or reject responses by employing an algorithm that determines if a program or advertisement is being watched.

In another embodiment, a program is downloaded to a receiving unit through a broadcast network, or other network such as the Internet, for example. Contained within the program is a description or indication of people, things, or events in a program or advertisement to which a viewer may respond and earn points. The indication may be in the form of buttons or icons that may be selected when a thing or event is seen in a program or advertisement. For example, a display may comprise buttons labeled with items such as an automobile brand, soft drink brand, or other merchandise brand and points may be awarded if the viewer selects the button when a corresponding image is displayed in a program or advertisement. The buttons may also be labeled to correspond to events such as kisses, winks, spoken words, or other events that may be employed to measure viewer attentiveness to a program or advertisement. Viewer responses may be sent to a server as they are received, may be stored and sent at predetermined intervals, when a predetermined number of responses have been accumulated, or may be sent in response to a signal from a server. This embodiment employs the registration and viewer information but does not require the development of enhancements. As previously described, this embodiment may accept a plurality of responses and may accept or reject responses by employing an algorithm that determines if a program or advertisement is being watched. The algorithm may be implemented in the receiving unit or in a server. This embodiment may be implemented in a computer, such as a laptop computer with wireless Internet connection, for example, such that the audio and video of programs and advertisements are not altered. In this manner the viewer may watch unaltered broadcast programs and advertisements and may earn points through responses input to the laptop computer that reflect people, things, or events contained within a broadcast program or advertisement.

In each of the aforedescribed embodiments, information of viewer response to program events, people, things, or other stimuli, is transferred to a server. The accumulated responses of a plurality of viewers may be employed to produce a report of viewing statistics including number of viewers, distribution of demographics of viewers, attentiveness to program and advertising content and other metrics that may be employed to assess audience characteristics and to select advertising tailored to a particular audience. Further, the number of points associated with a program may be increased in order to attract viewers. Bonus point events may be employed to attract viewers during periods of lower viewership. Bonus point events may also be configured to attract certain groups of viewers, such as those over 40 years of age, for example, to programs that include advertising directed to that group.

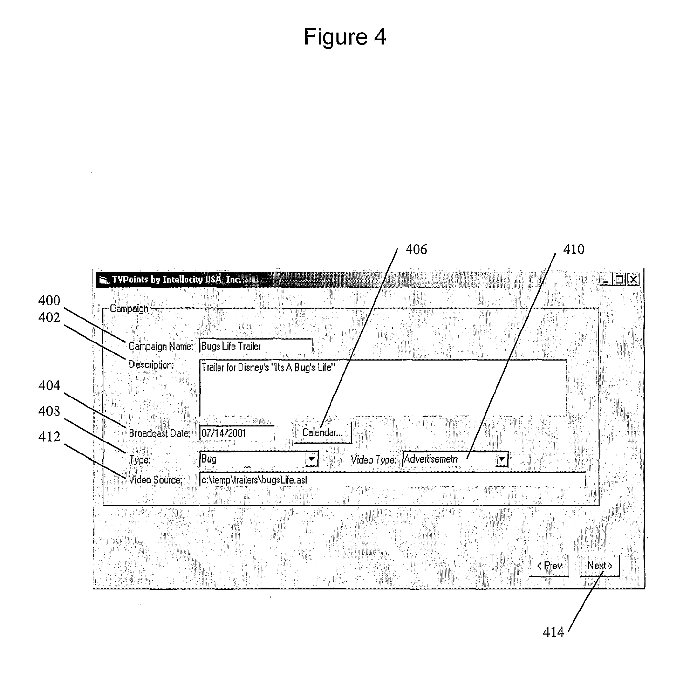

Implementation of the present invention may be simplified through the use of a campaign wizard through which programs, enhancements, stimuli, and point rewards may be defined. Figure 4 depicts an electronic entry form that may be employed to establish a points reward campaign. Campaign name 400 is a label the user may assign to this particular campaign for easy retrieval or modification later. Description 402 is a textual description of the campaign that may be also be accessed as part of a search for a particular campaign or type of campaign. Broadcast date 404 and calendar 406 may be used to specify the expected broadcast date of the enhanced content. The campaign type 408 allows the user select the type of campaign. Campaign types may include:
- "Watch" campaigns in which on-screen prompts are displayed at the beginning of a program
- "Watch Closely" campaigns in which prompts, invisible to the viewer, are synchronized with certain events within a program (such as a keyword being spoken, for example)
- "Watch Them All" campaigns in which multiple episodic Watch campaigns are linked and bonus points are awarded to viewers who participate in a predetermined number of episodes within a series.
- "Watch Them All Closely" campaigns in which multiple Watch Closely campaigns, and/or individual events across multiple episodes, are linked and bonus points are awarded to viewers who participate in a predetermined number of episodes within a series.
- "Watch and Win" campaigns in which viewers may find and collect "game pieces" embedded in a program or advertisement and then may access a related site to determine if their game piece is a winner.
- "Live" campaigns in which on-screen and/or hidden prompts are made available to the viewer by the director of a live event
- "Advertising" campaigns in which on-screen and/or hidden prompts are made available to the viewer during a commercial and responding to the prompt increments the viewer's account for the currently tuned service and/or MSO.
- "Walled Garden" campaign in which visiting participating walled garden sites and/or clicking on interactive ads shall increment the viewer's designated account (MSO or Service Provider)

Continuing with figure 4, Video type 410 may be an advertisement, full-length feature video, and may be also indicated as the video source 412. Clicking on the 'Next>' button 414 may bring up an enhancement creation screen.

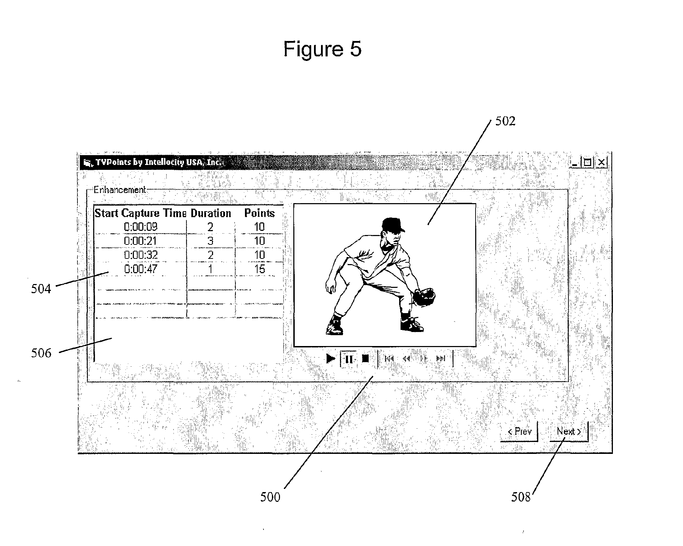

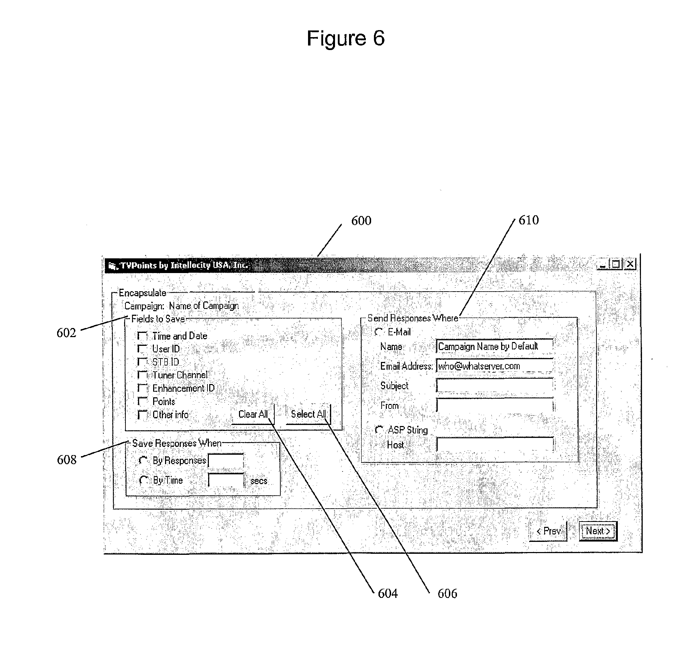

Figure 5 depicts an enhancement creation screen. A user may employ video controls 500 to start, stop, pause, and reposition a video program or advertisement at any location. Images of the movie may be presented in image preview area 502. When paused, an event entry 504 comprising start capture time, duration of the capture event, and the number of points awarded may be entered into event list 506. The start capture time and duration of capture event may be employed by the start capture 302 and end capture 304 routines depicted in figure 3. When the enhancements have been entered, a user may select the Next> button 508 may navigate the user to a data encapsulation screen as shown in figure 6.

Figure 6 depicts a data encapsulation screen. This screen may be employed to define data to be stored from viewer responses. Data storage may correspond to steps performed in user response routine 306 shown in figure 3 and the data may be stored in server 104 of figure 1. Employing data encapsulation screen of figure 6, the user may define how to encapsulate the data from viewer responses. Encapsulation screen 600 comprises data selection menu 602, data scheduling 608, and data destination 610. Through data selection menu 602, the user may select what data is to be transferred. Types of data may include time and date, user ID, tuner channel, enhancement ID, points and other information. Clear button 604 and select all button 606 may be employed to simplify data type selection. Data scheduling menu 608 may be employed to define when data is transferred. Data may be transferred when a predetermined number of responses have been stored, at predetermined intervals, or by event, such as the selection of another channel or turning off of the receiving unit, for example. The scheduling of data transfers may also reflect load balancing requirements of a server or other criteria. Data destination menu 610 may be employed to specify or select the server to which data is transferred and to specify an identifier or other information sent with the data.

The viewer may be notified by e-mail if accumulated points reach or exceed a predetermined count. If a viewer's point total is near value that allows redemption for a product or service, an e-mail message may be generated to encourage the viewer to watch a particular broadcast or broadcasts.

A viewer may obtain information regarding how to participate in a points program through a web site or though information displayed on the viewer's receiving unit. An operational sequence may comprise:
- a viewer is watching a broadcast program.
- the viewer is notified that the program is enhanced by having a "bug" popup on the screen. A bug is an icon or other visual indicator.
- the viewer selects an enhanced mode by clicking a specific button on their remote control or keyboard. This selection of an enhanced mode may include transmission of a message from the receiving unit to a broadcast unit over an upstream channel or over a network such as the Internet.
- the viewer may be greeted and provided with a page of "how to" instructions.
- a trigger, embedded in the content, is sent to the receiving unit to enable acceptance of a viewer response.
- software in the receiving unit may enable display of the specific "bug" or make the entire video screen a hotspot. The hotspot is enabled, effectively starting the capture of viewer responses.
- when an event occurs, the viewer may provide a response through a mouse, remote control, keyboard, or other input device. The receiving unit detects the response and updates data containing a time & date stamp and other information, such as channel number, for example. Code may be included to produce a single entry if the user clicks multiple times within one event.
- the receiving unit receives another trigger that disables the hotspot, effectively stopping the capture of responses. Alternately, a timer may be started at the receipt of the start capture trigger and after a predetermined amount of time, the hotspot is disabled.
- a transmit signal may be created periodically, randomly, in response to size of data stored, or in response to another condition. When the transmit signal is activated, the receiving unit sends response information to a server
- the server receives the information from receiving unit and may store the data or a portion thereof.
- the server updates tables or other data structures.

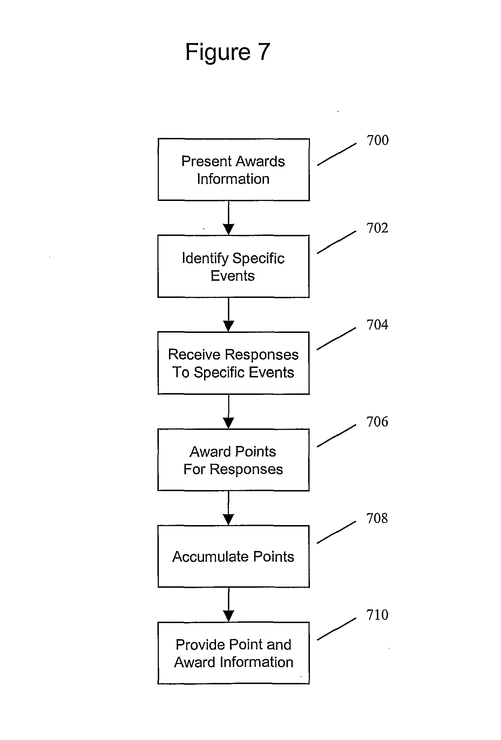

Figure 7 is a flowchart of operation of an embodiment of the present invention. At step 700, information of the awards campaign is presented to viewers. Such presentation may comprise a promotional advertisement, e-mail, postal mail, web site or other conveyance of information. At step 702, events contained within broadcast content (i.e. a program or advertisement) are identified. Identification may comprise a list of visual or audible events, or may comprise a displayed image such as an icon or logo, for example of items to watch or listen. At step 704, viewer responses to the events are received. At step 706, points are awarded for accepted viewer responses. At step 708, points are accumulated for each viewer. At step 710, information is provided describing products and service for which points may be redeemed.

A viewer may access a web page to determine the number of points accumulated, awards that may be provided, and other information. Access to awards may not require the entry of a password while access to accumulated points may require entry of a password. An operational sequence of viewer access to a website may comprise:
- viewer accesses a points website.
- viewer reviews available awards.
- viewer accesses points account page.
- viewer enters username and password
- a server determines accumulated points.
- a display may be produced and may contain text and graphics showing the number of points accumulated.

The present invention may also allow points to be earned by answering a questionnaire concerning a product or program, thereby allowing viewing of programs at a location other than the viewer's residence. A questionnaire may provide customer education of products and may be used to allow for vacations and viewing or programs with friends or relatives. A questionnaire may also offer a viewer an opportunity to accumulate additional points if the viewer's point total is near the number of points required to obtain an award. Additionally, audio signals may be used to indicate that reward points may be earned by user response. Audio signals may be employed to reduce viewer likelihood to mute audio output during advertising messages.

As a short review, this disclosure discusses that viewers of broadcast content are awarded points for responding to events contained in or presented during the broadcast. Points are accumulated and additional points may be awarded for viewing a plurality of episodes or presentations of an advertisement. Points may be redeemed for products or services. Broadcast content may be enhanced to include point event indicators. A software program, downloaded to a receiving unit, processes viewer responses and transfers response information to a server. Processing viewer responses may include a time period in which a viewer response is accepted. Reponses entered at other times, or responses greater than or equal to a predetermined number may be rejected. A website may provide viewer point information and awards information. A tool set allows simplified implementation of a points award program including specification of program name, broadcast content, schedule, events, point values, response time periods, data stored, schedule of storage and storage destination.

## Claims

1. A receiving unit (130) for rewarding a viewer to watch broadcast content comprising:
a network connection (118) that allows said receiving unit (130) to communicate with a server (102, 104), said server (102, 104 operable to receive a response to an event from said viewer, assign a point value to said response, and accumulate said point value with previous point values, if any, to produce a point total that may be redeemed for an award;
a first software program responsive to a signal contained in said broadcast, said signal indicating the beginning of a time period during which said response to an event may be received;
a second software program that stores said response; and
a third software program that transfers said response to said server (102, 104).
**characterized in that** said third software program inhibits transfer of said response information if a plurality of inputs greater than or equal to a predetermined number are received from said viewer.

2. The receiving unit of claim 1 further comprising:
a software routine that accumulates a predetermined number of responses prior to transferring said responses to said server.

3. The receiving unit of claim 1 further comprising:
a software routine that transfers said response to said server (102, 104) at a predetermined time.

4. The receiving unit of claim 1 further comprising:
a software routine that transfers said response to said server (102, 104) when a transmit signal is present in said broadcast content.

5. The receiving unit of claim 1:
wherein said first software program displays a button containing an image representative of said event contained in said broadcast content; and
wherein said second program receives an input from said viewer when said viewer activates said button, said second program associating said input with said button to produce said response.

6. The receiving unit of claim 5 wherein said response information further comprises:
the time that said input was received.

7. The receiving unit of claim 1 wherein said receiving unit is any one of: a set-top box, a personal computer or an interactive television.

8. A method of rewarding viewers to watch broadcast content comprising:
informing said viewers that awards may be earned by responding to specific events contained in said broadcast content;
identifying said specific events;
providing an interface through which said viewers may enter a response to said events;
receiving said response;
assigning a point value to said response;
accumulating said point value with previous point values, if any, associated with a previous response from said viewer to produce a point total,
providing redemption of said points when said point total is greater than or equal to a predetermined number of points.
**characterized in that** said step of accumulating further comprises not accumulating said count value if the number of viewer responses during said time period is greater than or equal to a predetermined number.

9. The method of claim 8 wherein said step of receiving said response comprises:
creating a time period during which a viewer response may be received.

10. The method of claim 8 wherein said step of assigning a point value further comprises:
awarding additional points if said viewer has responded to a predetermined number of episodes of said content.

11. The method of claim 8 wherein said step of identifying said specific events further comprises:
outputting a visual indicator.

12. The method of claim8 wherein said step of identifying said specific events further comprises:
outputting an audible indicator.

13. A system for rewarding a viewer to watch broadcast content comprising:
a server (102, 104)that includes an enhancement (106) that may be provided with said broadcast content, said enhancement (106) indicating an event for which a viewer response can be awarded points;
a network connection (118) for communicating said response;
a first software program that receives said response and assigns a point value to said response; and
a second software program that accumulates said point values with previous point values, if any, und stores an accumulated result,
**characterized in that** said second software program inhibits transfer of said response information if a plurality of inputs greater than or equal to a predetermined number are received from said viewer.

14. The system of claim 13 further comprising:
a receiving unit that renders said enhancement (106) which identifies said event and that accepts said viewer response to said event.

15. The system of claim 13, wherein said second program enables redemption of said points for rewarding said viewer when said accumulated result is greater than or equal to a predetermined number of points.

16. The system of claim 13 further comprising:
a third software program that produces an interface through which said viewer registers to accumulate points.

17. The system of claim 13 further comprising:
a web page that describes a product that can be obtained by redeeming a predetermined number of points.

18. The system of claim 13 further comprising:
a web page that describes a service that may be obtained by redeeming a predetermined number of points.

19. The system of claim 13 wherein said enhancement (106) further comprises:
a signal that indicates the time period when said receiving unit will accept said response to said event from said viewer.

20. The system of claim 13 further comprising:
a software routine that may be downloaded to said receiving unit, said software routine being responsive to a signal in said enhancement that indicates a time period when said receiving unit will accept said response to said event from said viewer.

21. The system of claim 13 further comprising:
a campaign creation tool that specifies a campaign name, broadcast date, and video source of said broadcast content;
an event definition tool that specifies a time period associated with said event during which said viewer response will be accepted and
a data encapsulation tool that defines data to be saved, the scheduling of when said data is saved, and the location at which said data is saved.

22. The method of claim 8 further comprising:
registering viewers said and obtaining demographic information describing said viewers;
calculating the number of said viewers providing responses to said events contained in of said broadcast content; and
generating a report including the number of said viewers and a demographic profile of said viewers.

## Patentansprüche

1. Empfangsanlage (130), um einen Fernsehzuschauer für das Anschauen einer Sendung zu belohnen, mit:
einem Netzanschluss (118), der es der Empfangsanlage (130) gestattet, mit einem Server (102,104) zu kommunizieren, der eine Reaktion auf ein Ereignis von besagtem Fernsehzuschauer empfangen kann, besagter Reaktion einen Punktwert zuweisen kann und
Addieren des Punktwerts zu vorherigen Punktwerten, falls vorhanden, so dass sich eine Gesamtpunktzahl ergibt,
die für eine Belohnung eingelöst werden kann;
einem ersten Softwareprogramm, das auf ein Signal reagiert, das in der Sendung enthalten ist; besagtes Signal zeigt den Anfang eines Zeitraums an, während dessen besagte Reaktion auf ein Ereignis empfangen werden kann;
einem zweiten Softwareprogramm, das die Reaktion speichert; und
einem dritten Softwareprogramm, das die Reaktion an den Server (102,104) überträgt.
**gekennzeichnet dadurch, dass** das drittes Softwareprogramm die Übertragung der Reaktionsinformation verhindert, wenn eine Zahl von Eingaben größer als oder gleich einer vorherbestimmten Zahl von besagtem Fernsehzuschauer erhalten wird.

2. Empfangsanlage nach Anspruch 1, des weiteren umfassend:
eine Softwareroutine, die eine vorherbestimmte Zahl von Reaktionen sammelt, bevor sie die Reaktionen an den Server überträgt.

3. Empfangsanlage nach Anspruch 1, des weiteren umfassend:
eine Softwareroutine, die besagte Reaktion an den Server (102,104) zu einer vorherbestimmten Zeit überträgt.

4. Empfangsanlage nach Anspruch 1, des weiteren umfassend:
eine Softwareroutine, die besagte Reaktion an den Server (102,104) überträgt, wenn ein Übertragungssignal in dem Sendungsinhalt vorhanden ist.

5. Empfangsanlage nach Anspruch 1:
wobei besagtes erstes Softwareprogramm einen Knopf anzeigt, der ein Bild enthält, das repräsentativ für das Ereignis ist, das in der Sendung enthalten ist; und
wobei besagtes zweites Programm eine Eingabe von besagtem Fernsehzuschauer empfängt, wenn der Fernsehzuschauer den Knopf betätigt, und das zweites Programm ordnet die Eingabe dem Knopf zu, um besagte Reaktion herzustellen.

6. Empfangsanlage nach Anspruch 5, wobei die Reaktionsinformationen des weiteren umfassen:
den Zeitpunkt, zu dem die Eingabe empfangen wurde.

7. Empfangsanlage nach Anspruch 1, wobei die Empfangsanlage eine der folgenden ist: eine Set-top-Box, ein PC oder ein interaktiver Fernseher.

8. Verfahren zum Belohnen von Zuschauern, um Sendungen zu sehen, mit:
Informieren der Zuschauer, dass Belohnungen verdient werden können, indem man auf spezifische Ereignisse reagiert, die in der Sendung enthalten sind;
Identifizierung der spezifischen Ereignisse;
Lieferung einer Schnittstelle, wodurch die Zuschauer eine Reaktion auf die Ereignisse eingeben können;
Empfang der Reaktion;
Zuteilung eines Punktwerts an die Reaktion;
Addition des Punktwerts zu vorherigen Punktwerten, falls vorhanden, für frühere Reaktionen des Fernsehzuschauers, um eine Gesamtpunktzahl herzustellen,
Einlösung der Punkte, wenn der Gesamtbetrag größer als oder
gleich einer vorherbestimmten Punktezahl ist.
**gekennzeichnet dadurch, dass** besagte Phase der Addition des weiteren die Nicht-Addition des Wertes umfasst,
wenn die Zahl der Zuschauerreaktionen während besagten Zeitraums größer als oder gleich einer vorherbestimmten Zahl ist.

9. Verfahren nach Anspruch 8, wobei besagte Phase des Empfangs der Reaktion umfasst:
Schaffung eines Zeitraums, während dessen eine Zuschauerreaktion empfangen werden kann.

10. Verfahren nach Anspruch 8, wobei besagte Phase der Zuteilung eines Punktwerts des weiteren umfasst:
Zuteilung zusätzlicher Punkte, wenn besagter Fernsehzuschauer auf eine vorherbestimmte Zahl von Folgen des Inhalts reagiert hat.

11. Verfahren nach Anspruch 8, wobei besagte Phase der Identifizierung spezifischer Ereignisse des weiteren umfasst:
Ausgabe einer visuellen Anzeige.

12. Verfahren nach Anspruch 8, wobei besagte Phase der Identifizierung spezifischer Ereignisse des weiteren umfasst:
Ausgabe einer Ansage.

13. System, um einen Fernsehzuschauer für das Anschauen von Sendungen zu belohnen, mit:
einem Server (102,104) mit einem Zusatz (106), der mit der Sendung geliefert werden kann und ein Ereignis anzeigt, bei dem einer Zuschauerreaktion Punkte zuerkannt werden können;
einem Netzanschluss (118), um besagte Reaktion mitzuteilen;
einem ersten Softwareprogramm, das die Reaktion empfängt und ihr einen Punktwert zuteilt; und
einem zweiten Softwareprogramm, das besagte Punktwerte zu vorherigen Punktwerten addiert, falls vorhanden,
und ein Gesamtergebnis speichert,
**gekennzeichnet dadurch, dass** das zweite Softwareprogramm die Übertragung der Reaktionsinformationen verhindert, wenn eine Vielzahl von Eingaben, die größer als oder gleich einer vorherbestimmten Zahl ist, von besagtem Fernsehzuschauer empfangen wird.

14. System nach Anspruch 13, des weiteren umfassend:
eine Empfangsanlage, die den Zusatz (106) liefert, der besagtes Ereignis identifiziert und die Zuschauerreaktion auf das Ereignis entgegennimmt.

15. System nach Anspruch 13, wobei das zweite Programm die Einlösung der Punkte ermöglicht, um den Fernsehzuschauer zu belohnen, wenn das angesammelte Ergebnis größer als oder gleich einer vorherbestimmten Punktezahl ist.

16. System nach Anspruch 13, des weiteren umfassend:
ein drittes Softwareprogramm, das eine Schnittstelle produziert, über die sich der Fernsehzuschauer anmeldet, um Punkte zu sammeln.

17. System nach Anspruch 13, des weiteren umfassend:
eine Webseite, die ein Produkt beschreibt, das man durch Einlösung einer vorherbestimmten Punktezahl erhalten kann.

18. System nach Anspruch 13, des weiteren umfassend:
eine Webseite, die eine Dienstleistung beschreibt, die durch Einlösung einer vorherbestimmten Punktezahl erhalten werden kann.

19. System nach Anspruch 13, wobei besagter Zusatz (106) des weiteren umfasst:
ein Signal, das den Zeitraum bezeichnet, in dem die Empfangsanlage die Reaktion auf die Veranstaltung vom Fernsehzuschauer entgegennehmen wird.

20. System nach Anspruch 13, des weiteren umfassend:
eine Softwareroutine, die in die Empfangsanlage heruntergeladen werden kann, wobei die Softwareroutine auf ein Signal in dem Zusatz reagiert, der einen Zeitraum angibt, in dem die Empfangsanlage die Reaktion auf die Veranstaltung vom Fernsehzuschauer entgegennehmen wird.

21. System nach Anspruch 13, des weiteren umfassend:
ein Kampagnenerstellungswerkzeug, das den Namen der Kampagne, das Sendedatum und die Videoquelle der Sendung angibt;
ein Ereignisdefinitionswerkzeug, das einen Zeitraum angibt, der mit besagtem Ereignis verbunden ist und
während dessen die Zuschauerreaktion entgegengenommen wird, und
ein Datenkapselungswerkzeug, das Daten festlegt, die gespeichert werden sollen, die Termine, wann die Daten gespeichert werden, und den Ort, wo die Daten gespeichert werden.

22. Verfahren nach Anspruch 8, des weiteren umfassend:
Registrierung der Zuschauer und Einholung demografischer Angaben über die Zuschauer;
Berechnung der Zahl der Zuschauer, die auf besagte Ereignisse in der Sendung reagieren; und
Erstellung eines Berichts, der die Zahl der Zuschauer und ein demografisches Profil der Zuschauer enthält.

## Revendications

1. Une unité de réception (130) pour récompenser un spectateur de regarder un contenu diffusé comprenant:
une connexion réseau (118) qui permet à ladite unité (130) de réception de communiquer avec un serveur (102, 104), ledit serveur (102, 104), pouvant fonctionner pour recevoir une réponse à un événement de la part dudit spectateur, attribuer une valeur en points à ladite réponse , et
accumuler ladite valeur de points avec les valeurs des points précédents, le cas échéant, de produire un total de points qui peuvent être échangés contre une récompense;
un premier programme de logiciel répondant à un signal contenu dans ladite diffusion, ledit signal indiquant le début d'une période de temps pendant laquelle ladite réponse à un événement peut être reçue;
un second programme de logiciel qui stocke ladite réponse; et
un troisième programme de logiciel qui transfère ladite réponse audit serveur (102, 104).
**caractérisé en ce que** ledit troisième programme logiciel inhibe le transfert de ladite information de réponse si une pluralité d'entrées supérieures ou égales à une valeur prédéterminée sont reçues à partir dudit spectateur.

2. L'unité de réception selon la revendication 1, comprenant en outre:
un sous-programme de logiciel qui accumule un nombre prédéterminé de réponses avant le transfert desdites réponses au dit serveur.

3. L'unité de réception selon la revendication 1, comprenant en outre:
une routine logicielle qui transfère ladite réponse audit serveur (102, 104) à un moment prédéterminé.

4. L'unité de réception selon la revendication 1, comprenant en outre:
une routine logicielle qui transfère ladite réponse audit serveur (102, 104) quand un signal de transmission est présent dans ledit contenu diffusé.

5. L'unité de réception de la revendication 1:
dans laquelle ledit premier programme de logiciel affiche un bouton contenant une image représentative dudit événement contenu dans ledit contenu diffusé; et
dans laquelle ledit second programme reçoit une entrée provenant dudit pectateur lorsque ledit spectateur actionne ledit bouton, ledit second programme associant ladite entrée avec ledit bouton afin de produire ladite réponse.

6. L'unité de réception selon la revendication 5, dans lequel lesdites informations de réponse comprennent en outre:
le moment où ladite entrée a été reçue.

7. L'unité de réception selon la revendication 1, dans lequel ladite unité de réception est parmi:
un boîtier décodeur, un ordinateur personnel ou une télévision interactive.

8. Procédé pour récompenser des spectateurs pour regarder du contenu diffusé comprenant:
informer lesdits spectateurs que des récompenses peuvent être gagnées en répondant à des événements spécifiques contenus dans ledit contenu diffusé;
identifier lesdits événements spécifiques;
fournir une interface à travers laquelle lesdits spectateurs peuvent entrer une réponse auxdits événements;
recevoir ladite réponse;
attribuer une valeur de point à ladite réponse;
accumuler ladite valeur de point avec des valeurs de points précédents, le cas échéant, associés à une réponse antérieure dudit spectateur pour produire un total de points,
fournir l'utilisation desdits points lorsque ledit total de points est supérieur ou égal à un nombre prédéterminé de points.
**caractérisé en ce que** ladite étape d'accumulation comprend en outre de ne pas accumuler ladite valeur de comptage si le nombre de réponses de spectateurs pendant ladite période de temps est supérieure ou égale à un nombre prédéterminé.

9. Procédé selon la revendication 8, dans lequel ladite étape de réception de ladite réponse comprend:
la création d'un laps de temps pendant lequel une réponse de spectateur peut être reçue.

10. Procédé selon la revendication 8, dans lequel ladite étape d'affectation d'une valeur de point comprend en outre:
l'attribution de points supplémentaires si ledit spectateur a répondu à un nombre prédéterminé d'épisodes dudit contenu.

11. Procédé selon la revendication 8, dans lequel ladite étape d'identification desdits événements spécifiques comprend en outre:
fournir en sortie un indicateur visuel.

12. Procédé selon la revendication 8 dans lequel ladite étape d'identification desdits événements spécifiques comprend en outre:
fournir en sortie un indicateur sonore.

13. Un système pour récompenser un spectateur de regarder du contenu diffusé comprenant.:
un serveur (102, 104) qui comprend une amélioration (106) qui peut être fournie avec ledit contenu diffusé, ladite amélioration (106) indiquant un événement pour lequel la réponse du spectateur peut être récompensé de points;
une connexion réseau (118) pour faire communiquer ladite réponse;
un premier programme de logiciel qui reçoit ladite réponse et attribue une valeur de point à ladite réponse; et
un second programme de logiciel qui accumule lesdites valeurs de point avec des valeurs en points précédents, le cas échéant, et stocke un résultat accumulé,
**caractérisé en ce que** ledit second programme de logiciel inhibe le transfert de ladite information de réponse si une pluralité d'entrées supérieures ou égales à un nombre prédéterminé sont reçues à partir dudit spectateur.

14. Système selon la revendication 13, comprenant en outre:
une unité de réception qui rend ladite amélioration (106) qui identifie ledit événement et qui accepte ladite réponse de spectateur pour ledit événement.

15. Système selon la revendication 13, dans lequel ledit deuxième programme permet l'utilisation desdits points pour récompenser ledit spectateur lorsque ledit résultat accumulé est supérieur ou égal à un nombre prédéterminé de points.

16. Système selon la revendication 13, comprenant en outre:
un troisième programme de logiciel qui produit une interface à travers laquelle ledit spectateur s'enregistre pour accumuler des points.

17. Système selon la revendication 13, comprenant en outre:
une page Web qui décrit un produit qui peut être obtenu par l'utilisation d'un nombre prédéterminé de points.

18. Système selon la revendication 13, comprenant en outre:
une page Web qui décrit un service qui peut être obtenu par l'utilisation d'un nombre prédéterminé de points.

19. Système selon la revendication 13, dans lequel ladite amélioration (106) comprend en outre:
un signal qui indique la période de temps où ladite unité de réception accepte ladite réponse audit événement par ledit spectateur.

20. Système selon la revendication 13, comprenant en outre:
un sous-programme de logiciel qui peut être téléchargé à ladite unité de réception, ledit sous-programme de logiciel étant en charge de répondre à un signal de ladite amélioration qui indique une période de temps pendant laquelle ladite unité de réception accepte ladite réponse audit événement par ledit spectateur.

21. Système selon la revendication 13, comprenant en outre:
un outil de création de campagne qui spécifie un nom de campagne, la date de diffusion, et source vidéo dudit contenu de diffusion;
un outil de définition d'événement qui spécifie un intervalle de temps associé audit événement au cours duquel ladite réponse de spectateur sera prise en considération et
un outil d'encapsulation de données qui définit les données à sauvegarder, la programmation du moment où lesdites données sont sauvegardées, et l'endroit où lesdites données sont sauvegardées.

22. Procédé selon la revendication 8, comprenant en outre:
enregistrer lesdits spectateurs et obtenir des informations démographiques décrivant lesdits spectateurs;
calculer le nombre de spectateurs fournissant des réponses à ces événements contenus dans ledit contenu de diffusion; et
générer un rapport, incluant le nombre desdits spectateurs et un profil démographique desdits spectateurs.
